# EUROPEAN PATENT SPECIFICATION

(11) **EP 3 264 265 B1**
(45) Date of publication and mention of the grant of the patent: **29.01.2025**
(21) Application number: 15885828.2
(22) Date of filing: 20.03.2015
(51) Int. Cl.: G06F 9/445

(54) **APPLICATION PROTECTION METHOD, SERVER AND TERMINAL**
ANWENDUNGSSCHUTZVERFAHREN, SERVER UND ENDGERÄT
PROCÉDÉ, SERVEUR ET TERMINAL DE PROTECTION D'APPLICATION

(43) Date of publication of application: 03.01.2018
(73) Proprietor: Huawei Technologies Co., Ltd., Shenzhen, Guangdong 518129 (CN)
(72) Inventor: WANG, Fei, Shenzhen Guangdong 518129 (CN)
(74) Representative: Goddar, Heinz J.
(86) International application number: PCT/CN2015/074789
(87) International publication number: WO 2016/149889

(56) References cited:
- WO-A1-2011/064539
- CN-A- 1 929 646
- CN-A- 102 362 272
- CN-A- 103 605 551
- CN-B- 102 118 500
- US-A1- 2013 104 118
- US-A1- 2013 326 500

## Description

### TECHNICAL FIELD

Embodiments of the present invention relate to the field of communications technologies, and in particular, to an application protection method, a server, and a terminal.

### BACKGROUND

Existing operating systems may include an open system and a closed system. In the open system such as an Android (Android) system, many permissions and interfaces are opened, and the open system is in a cooperative relationship with other related parties such as a software/hardware vendor, a device manufacturer, and a telecommunications operator, to form an open ecosystem in a mobile industry. The software vendor develops various types of application software by using Java as a part for programming. Java is a programming language with a cross-platform capability, and causes no exclusive right obstacle that impedes innovation in the mobile industry. Currently, there is no protection mechanism for an Android application, and there are many Android application stores and many channels. Consequently, a developed original application has relatively low security, and stability of a software industry chain ecosystem is relatively poor. In the closed system such as an iOS system, when jailbreaking in an iOS system in a terminal succeeds, a software protection mechanism of the iOS system becomes invalid, that is, an application in the terminal can be copied, modified, and pirated, and therefore security of a developed original application is reduced and stability of a software industry chain ecosystem is reduced.

US 2013/326500 A1 discloses a mobile terminal and application providing method for the same whereby the method provides a requested application using an application package installer having multiple pieces of signature information. The application providing method comprises: obtaining an application package installer containing multiple pieces of signature information; determining whether signature information corresponding to the mobile terminal is present in the multiple pieces of signature information; and generating, when signature information corresponding to the mobile terminal is present, a signed application package based on the corresponding signature information.

US 2013/104118 A1 discloses a method, system and computer program product for controlling the installation of applications on a user terminal. In one aspect, a catalogue server identifies a first and a second installation control setting corresponding to a first and a second application on the basis of user identification data from a data store comprising entries for a plurality of applications and their corresponding installation control settings. Subsequently, the catalogue server determines installation control data for at least one of the first and second application on the basis of the first and the second installation control setting. The determined installation control data is transmitted to the user terminal for controlling installation of at least one of the first and the second application.

### SUMMARY

The present invention provides application protection method of claim 1 and 6, a terminal of claim 11 and an application management server of claim 12, so that application security can be effectively improved and stability of a software industry chain ecosystem can be effectively improved. Preferred implementation manners are disclosed in the dependent claims.

In the embodiments of the present invention, a terminal sends an application download request for a target application to an application management server, so that the application management server compiles an application installation package of the target application according to terminal identification information of the terminal that is carried in the application download request. Then, the terminal receives the compiled application installation package sent by the application management server, and installs, according to the compiled application installation package, the target application in a runtime environment that is based on the terminal identification information. Therefore, application security can be effectively improved and stability of a software industry chain ecosystem can be effectively improved.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of an application protection method according to an embodiment of the present invention;
FIG. 2 is a schematic flowchart of an application protection method according to another embodiment of the present invention;
FIG. 3 is a schematic flowchart of an application protection method according to another embodiment of the present invention;
FIG. 4 is a schematic flowchart of an application protection method according to another embodiment of the present invention;
FIG. 5 is a schematic structural diagram of an application management server according to an embodiment of the present invention;
FIG. 6 is a schematic structural diagram of an application management server according to another embodiment of the present invention;
FIG. 7 is a schematic structural diagram of a terminal according to an embodiment of the present invention;
FIG. 8 is a schematic structural diagram of a terminal according to another embodiment of the present invention; and
FIG. 9 is a schematic structural diagram of an application protection system according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

The embodiments of the present invention disclose an application protection method. A terminal sends an application download request for a target application to an application management server, and the application download request carries terminal identification information which identify a unique terminal, so that the application management server compiles an application installation package of the target application according to the terminal identification information. Then, the terminal receives the compiled application installation package sent by the application management server, and installs, according to the compiled application installation package, the target application in a runtime environment that is based on the terminal identification information. The runtime environment is obtained by compiling a preset intermediate file according to the terminal identification information, and the preset intermediate file includes a runtime (Runtime) file and a framework file (Framework). Therefore, application security can be effectively improved and stability of a software industry chain ecosystem can be effectively improved.

The terminal identification information mentioned in the embodiments of the present invention may be used to identify a unique terminal. The terminal identification information includes but is not limited to one or more of an EMMC ID (Embedded Multimedia Card Identity, embedded multimedia card identity), a global unique hardware identity of an EMMC flash, a 32-bit hexadecimal value), a baseband ID (Baseband Identity, baseband chip hardware identity, a baseband chip hardware identity of a mobile phone, a 32-bit hexadecimal value), an IMEI (International Mobile Equipment Identity, international mobile equipment identity, an "electronic serial number" that includes a 15-digit number), or an MEID (Mobile Equipment Identifier Identity, mobile equipment identifier, a global unique 56-bit mobile equipment identifier).

In the embodiments of the present invention, after the application management server compiles the application installation package of the target application according to the terminal identification information, the compiled application installation package can be installed only in the runtime environment that is based on the terminal identification information, so as to generate a dedicated installation package and improve application security. Even if another terminal obtains the compiled application installation package, the another terminal cannot locally install the application installation package or obtain an original application installation package according to the compiled application installation package, and further cannot modify or pirate the application installation package.

In the embodiments of the present invention, the terminal may include a personal computer, an intelligent mobile phone (such as an Android mobile phone or an iOS mobile phone), a tablet computer, a palmtop computer, a mobile Internet device (MID, Mobile Internet Device), a wearable intelligent device, or the like. This is not specifically limited in the embodiments of the present invention.

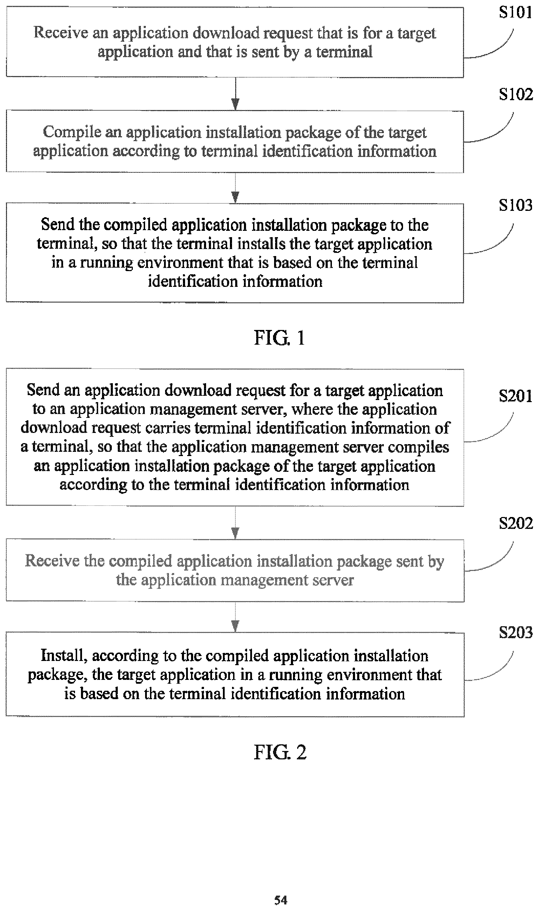

Referring to FIG. 1, FIG. 1 is a schematic flowchart of an application protection method according to an embodiment of the present invention. As shown in the figure, the application protection method in this embodiment of the present invention may include the following steps.

S101. Receive an application download request that is for a target application and that is sent by a terminal.

An application management server may receive the application download request that is for the target application and that is sent by the terminal. The application download request may carry terminal identification information of the terminal.

S102. Compile an application installation package of the target application according to terminal identification information.

The application management server may compile the application installation package of the target application according to the terminal identification information, to generate a dedicated installation package corresponding to the terminal identification information. Compared with a manner in which a terminal receives an application installation package that is of a target application and that is fed back by an application management server according to an application download request, and compiles the application installation package of the target application according to terminal identification information, in a manner in which an application management server compiles an application installation package of a target application in the cloud according to terminal identification information, because a compilation algorithm is stored in the cloud, a user cannot obtain the compilation algorithm or obtain an original application installation package according to the compiled application installation package, so that application security is higher. The application installation package of the target application is compiled in the cloud, so that system performance of the terminal can be improved. The compilation algorithm is stored in the cloud, so that when the compilation algorithm is updated, a compilation algorithm stored in the application management server can be directly updated and a compilation algorithm stored in each terminal does not need to be updated, and updating efficiency is higher.

In an optional embodiment, the application management server may obtain a hash (hash) value of the terminal identification information, and compile the application installation package of the target application according to the hash value. Compilation refers to converting a source program wrote by using an advanced program design language into a target program represented by using a machine language.

Further optionally, the application management server may compile the application installation package of the target application according to the hash value, and generate an ABI (Application Binary Interface, application binary interface) corresponding to the hash value. The ABI describes an underlying interface between an application program and an OS (Operating System, operating system), and relates to all aspects of the application program, such as a format of a target file, a function call convention, and how to call a system. The ABI can enable the application program to run in an operating system that supports the ABI, and the application program does not need to be modified. The ABI may include a link address of the application installation package of the target application and a symbol table name of the application installation package of the target application. The application program is generally developed in a modular manner, and modules are generally classified according to functions, for example, a .c file or a .cpp file is a compilation unit, that is, a module, and a .o target file is generated after compilation. To finally generate an executable file, a static library, or a dynamic-link library, all compilation units need to be combined together according to a specific convention, and this combination process is referred to as linking. All the compilation units are corresponding to one link address. A function and data are identified by using a symbol. Generally, symbols are classified into a global symbol and a static symbol. The global symbol can be referenced by another module, and the static symbol can be referenced only in a current module. When each module is compiled, a symbol table needs to be created. The symbol table includes a symbol (an export symbol) that is in the current module and that can be referenced by another module, and further includes a symbol (an import symbol, that is, an undefined symbol) that is referenced in the current module but is defined in another module. All symbol tables are corresponding to one symbol table name.

Further optionally, the application management server may separately adjust the link address of the application installation package of the target application and the symbol table name of the application installation package of the target application according to the hash value. In this embodiment of the present invention, an existing compilation algorithm is adjusted. In the existing compilation algorithm, application installation packages, obtained by different terminals, of target applications have a same link address and a same symbol table name. In this embodiment of the present invention, the link address of the application installation package of the target application and the symbol table name of the application installation package of the target application are adjusted according to the hash value of the terminal identification information, and application installation packages, obtained by different terminals, of target applications have different link addresses and different symbol table names, so that a dedicated installation package corresponding to the terminal identification information is generated.

Further optionally, the application management server may perform an exclusive OR operation on the link address of the application installation package of the target application and the hash value, to generate a link address of the compiled application installation package. The symbol table name of the application installation package of the target application is a character string not a number. Therefore, the exclusive OR operation cannot be directly performed on the symbol table name and the hash value. The application management server may encode the symbol table name of the application installation package of the target application by means of, for example, Base64 encoding (a manner in which a character string can be encoded into binary data), and perform an exclusive OR operation on the encoded symbol table name and the hash value, to generate a symbol table name of the compiled application installation package.

In an optional embodiment, after compiling the application installation package of the target application according to the terminal identification information, the application management server may encrypt the compiled application installation package. In this embodiment of the present invention, application security can be further improved.

Further optionally, the application management server may determine a class constructor in the compiled application installation package and encrypt the determined class constructor. The class constructor refers to defining an initiated state when a class object is created. In a runtime process of the application installation package, the class constructor is executed more than 0 times, and there is a relatively few quantity of execution times. The class constructor is encrypted instead of all functions, so that processing efficiency can be improved.

Further optionally, the application management server may encrypt the class constructor according to a preset public key.

S103. Send the compiled application installation package to the terminal, so that the terminal installs the target application in a runtime environment that is based on the terminal identification information.

The application management server may send the compiled application installation package to the terminal, so that the terminal installs the target application in the runtime environment that is based on the terminal identification information. The runtime environment is obtained by the terminal by compiling a preset intermediate file of the terminal according to the terminal identification information, and the preset intermediate file may include a runtime file and a framework file. Any application program needs to be supported by Runtime during runtime. The Runtime includes a function and a class library. The Framework includes a group of components, stipulates an application architecture, illustrates a whole design, dependency between coordinated members, responsibility allocation, and a control procedure, and provides a context (Context) relationship for member reuse. Before the terminal is delivered, the runtime environment may be obtained by compiling the preset intermediate file according to the terminal identification information. The compiled application installation package is obtained by performing compilation according to the terminal identification information, and the runtime environment of the terminal is obtained by compiling the preset intermediate file according to the terminal identification information, so that another terminal cannot install and run the foregoing compiled application installation package, and a dedicated application installation package is used by a specific terminal.

In an optional embodiment, after encrypting the compiled application installation package, the application management server may send the compiled and encrypted application installation package to the terminal, so that after the terminal installs the target application in the runtime environment, the terminal decrypts the compiled and encrypted application installation package according to a private key preset in a TrustZone (an architecture solution of a security chip, including a hardware security module such as a SIM (Subscriber Identity Module, subscriber identity module) card or an SoC (System-on-a-Chip, System-On-a-Chip)), and runs the target application. The TrustZone is a secure method in an operating system range. For a large quantity of applications on a high-performance computing platform, the TrustZone may include secure payment, DRM (Digital Rights Management, digital rights management), an enterprise service, and a Web-based service, and may protect peripheral devices such as a secure memory, an encryption block, a keyboard, and a screen from software attack. The private key is stored in the TrustZone, so that secrecy performance of the private key can be improved, and further, application security is improved.

In the application protection method shown in FIG. 1, an application download request that is for a target application and that is sent by a terminal is received, an application installation package of the target application is compiled according to terminal identification information carried in the application download request, and the compiled application installation package is sent to the terminal, so that the terminal installs the target application in a runtime environment that is based on the terminal identification information, and the runtime environment is obtained by the terminal by compiling a preset intermediate file of the terminal according to the terminal identification information. Therefore, application security can be effectively improved and stability of a software industry chain ecosystem can be effectively improved.

Referring to FIG. 2, FIG. 2 is a schematic flowchart of an application protection method according to another embodiment of the present invention. As shown in the figure, the application protection method in this embodiment of the present invention may include the following steps.

S201. Send an application download request for a target application to an application management server, where the application download request carries terminal identification information of a terminal, so that the application management server compiles an application installation package of the target application according to the terminal identification information.

The terminal may send the application download request for the target application to the application management server, and the application download request carries the terminal identification information of the terminal, so that the application management server compiles the application installation package of the target application according to the terminal identification information.

In an optional embodiment, before sending the application download request for the target application to the application management server, the terminal may compile a preset intermediate file according to the terminal identification information preset in a TrustZone. The compiled intermediate file constitutes a runtime environment that is based on the terminal identification information. The preset intermediate file may include a runtime file and a framework file.

The TrustZone is a secure method in an operating system range. The terminal identification information and a compilation algorithm are stored in the TrustZone, so that secrecy performance of the compilation algorithm can be improved, and further, security of the compiled preset intermediate file is improved.

Further optionally, the terminal may obtain a hash value of the terminal identification information, and compile the preset intermediate file according to the hash value.

Further optionally, the terminal may compile an ABI of the preset intermediate file according to the hash value, and generate an ABI corresponding to the hash value.

Further optionally, the terminal may separately adjust a link address and a symbol table name of the preset intermediate file according to the hash value. In this embodiment of the present invention, an existing compilation algorithm is adjusted. In the existing compilation algorithm, preset intermediate files in different terminals have a same link address and a same symbol table name. In this embodiment of the present invention, the link address of the preset intermediate file and the symbol table name of the preset intermediate file are adjusted according to the hash value of the terminal identification information, and compiled preset intermediate files in different terminals have different link addresses and different symbol table names, so that the runtime environment corresponding to the terminal identification information is constituted.

Further optionally, the terminal may perform an exclusive OR operation on the link address of the preset intermediate file and the hash value, to generate a link address of the compiled preset intermediate file. The symbol table name of the preset intermediate file is a character string not a number. Therefore, the exclusive OR operation cannot be directly performed on the symbol table name and the hash value. The terminal may encode the symbol table name of the preset intermediate file by means of, for example, Base64 encoding, and perform an exclusive OR operation on the encoded symbol table name and the hash value, to generate a symbol table name of the compiled preset intermediate file.

In an optional embodiment, the terminal may send the application download request to the application management server, so that the application management server compiles the application installation package of the target application according to the terminal identification information, and the application management server encrypts the compiled application installation package. In this embodiment of the present invention, application security can be further improved.

Further optionally, the application management server may encrypt the compiled application installation package according to a preset public key.

S202. Receive the compiled application installation package sent by the application management server.

The terminal may receive the compiled application installation package sent by the application management server.

In an optional embodiment, after the application management server encrypts the compiled application installation package, the terminal may receive the compiled and encrypted application installation package sent by the application management server.

S203. Install, according to the compiled application installation package, the target application in a runtime environment that is based on the terminal identification information.

The terminal may install, according to the compiled application installation package, the target application in the runtime environment that is based on the terminal identification information.

In an optional embodiment, after receiving the compiled and encrypted application installation package, the terminal may install the target application in the runtime environment that is based on the terminal identification information, decrypt the compiled and encrypted application installation package according to a private key preset in the TrustZone, and run the target application. In this embodiment of the present invention, the private key is stored in the TrustZone, so that the private key is avoided from software attack, secrecy performance of the private key can be improved, and further, application security is improved.

In the application protection method shown in FIG. 2, an application download request for a target application is sent to an application management server, and the application download request carries terminal identification information of a terminal, so that the application management server compiles an application installation package of the target application according to the terminal identification information, and feeds back the compiled application installation package. According to the compiled application installation package, the target application is installed in a runtime environment that is based on the terminal identification information. Therefore, application security can be effectively improved and stability of a software industry chain ecosystem can be effectively improved.

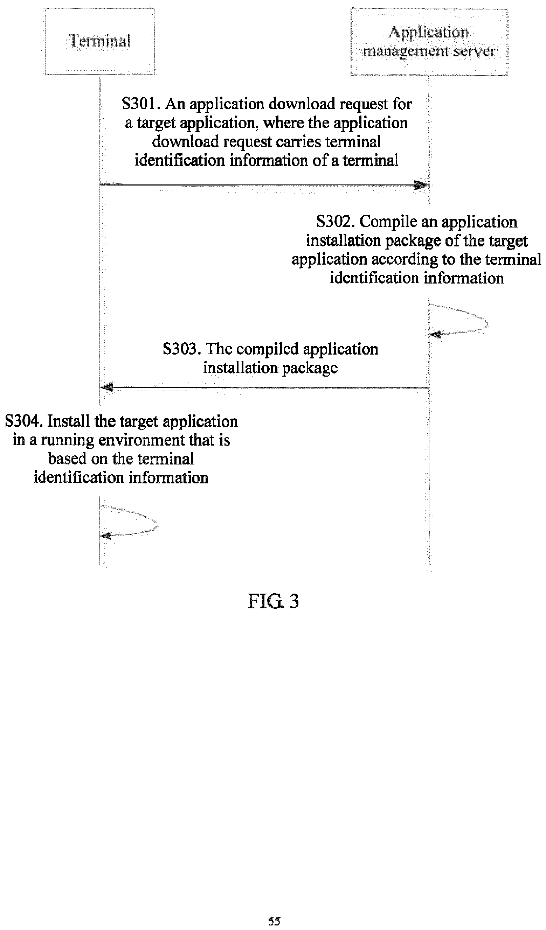

Referring to FIG. 3, FIG. 3 is a schematic flowchart of an application protection method according to another embodiment of the present invention. As shown in the figure, the application protection method in this embodiment of the present invention may include the following steps.

S301. A terminal sends an application download request for a target application to an application management server, where the application download request carries terminal identification information of the terminal.

The terminal may send the application download request for the target application to the application management server, and the application download request may carry the terminal identification information of the terminal.

S302. The application management server compiles an application installation package of the target application according to the terminal identification information.

After receiving the terminal identification information, the application management server may compile the application installation package of the target application according to the terminal identification information, to generate a dedicated installation package corresponding to the terminal identification information.

In an optional embodiment, the application management server may obtain a hash value of the terminal identification information, and compile the application installation package of the target application according to the hash value.

Further optionally, the application management server may compile the application installation package of the target application according to the hash value, and generate an ABI corresponding to the hash value. The ABI may include a link address of the application installation package of the target application and a symbol table name of the application installation package of the target application.

Further optionally, the application management server may separately adjust the link address of the application installation package of the target application and the symbol table name of the application installation package of the target application according to the hash value.

Further optionally, the application management server may perform an exclusive OR operation on the link address of the application installation package of the target application and the hash value, to generate a link address of the compiled application installation package. The application management server may encode the symbol table name of the application installation package of the target application by means of, for example, Base64 encoding, and perform an exclusive OR operation on the encoded symbol table name and the hash value, to generate a symbol table name of the compiled application installation package.

S303. The application management server sends the compiled application installation package to the terminal.

The application management server may send the compiled application installation package to the terminal.

S304. The terminal installs the target application in a runtime environment that is based on the terminal identification information.

The terminal may install, according to the compiled application installation package, the target application in the runtime environment that is based on the terminal identification information. The runtime environment is obtained by the terminal by compiling a preset intermediate file of the terminal according to the terminal identification information, and the preset intermediate file may include a runtime file and a framework file.

Optionally, the terminal may obtain a hash value of the terminal identification information, and compile the preset intermediate file according to the hash value. Further optionally, the terminal may compile the preset intermediate file according to the hash value, and generate an ABI corresponding to the hash value. The ABI may include a link address and a symbol table name of the preset intermediate file.

Further optionally, the terminal may separately adjust the link address of the preset intermediate file and the symbol table name of the preset intermediate file according to the hash value.

Further optionally, the terminal may perform an exclusive OR operation on the link address of the preset intermediate file and the hash value, to generate a link address of the compiled preset intermediate file. The terminal may encode the symbol table name of the preset intermediate file by means of, for example, Base64 encoding, and perform an exclusive OR operation on the encoded symbol table name and the hash value, to generate a symbol table name of the compiled preset intermediate file.

In the application protection method shown in FIG. 3, a terminal sends an application download request for a target application to an application management server, and the application download request carries terminal identification information of the terminal. The application management server compiles an application installation package of the target application according to the terminal identification information, and sends the compiled application installation package to the terminal. The terminal installs the target application in a runtime environment that is based on the terminal identification information. Therefore, application security can be effectively improved and stability of a software industry chain ecosystem can be effectively improved.

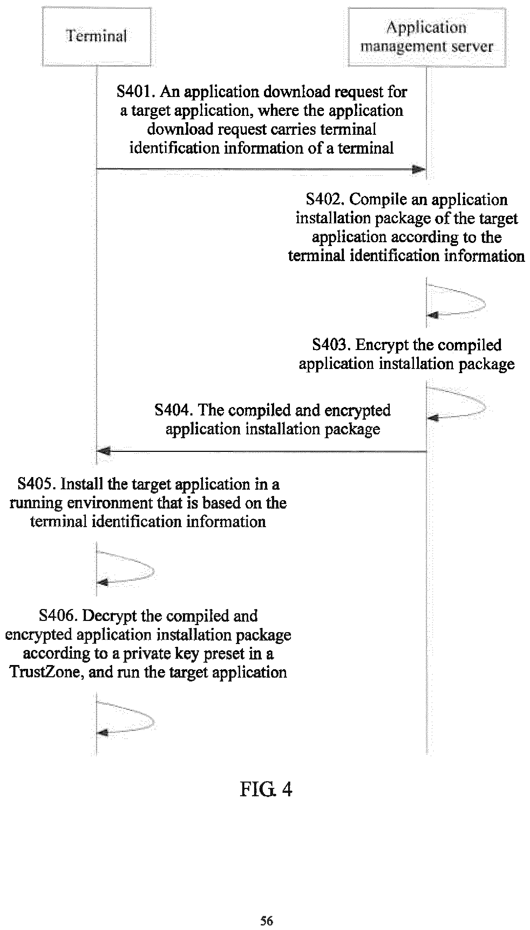

Referring to FIG. 4, FIG. 4 is a schematic flowchart of an application protection method according to another embodiment of the present invention. As shown in the figure, the application protection method in this embodiment of the present invention may include the following steps.

S401. A terminal sends an application download request for a target application to an application management server, where the application download request carries terminal identification information of the terminal.

The terminal may send the application download request for the target application to the application management server, and the application download request may carry the terminal identification information of the terminal.

S402. The application management server compiles an application installation package of the target application according to the terminal identification information.

After receiving the terminal identification information, the application management server may compile the application installation package of the target application according to the terminal identification information, to generate a dedicated installation package corresponding to the terminal identification information.

In an optional embodiment, the application management server may obtain a hash value of the terminal identification information, and compile the application installation package of the target application according to the hash value.

Further optionally, the application management server may compile the application installation package of the target application according to the hash value, and generate an ABI corresponding to the hash value. The ABI may include a link address of the application installation package of the target application and a symbol table name of the application installation package of the target application.

Further optionally, the application management server may separately adjust the link address of the application installation package of the target application and the symbol table name of the application installation package of the target application according to the hash value. Specifically, the application management server may perform an exclusive OR operation on the link address of the application installation package of the target application and the hash value, to generate a link address of the compiled application installation package. The application management server may encode the symbol table name of the application installation package of the target application by means of, for example, Base64 encoding, and perform an exclusive OR operation on the encoded symbol table name and the hash value, to generate a symbol table name of the compiled application installation package.

S403. The application management server encrypts the compiled application installation package.

After compiling the application installation package of the target application according to the terminal identification information, the application management server may encrypt the compiled application installation package.

Optionally, the application management server may determine a class constructor in the compiled application installation package and encrypt the determined class constructor. The class constructor refers to defining an initiated state when a class object is created. In a runtime process of the application installation package, the class constructor is executed more than 0 times, and there is a relatively few quantity of execution times. The class constructor is encrypted instead of all functions, so that processing efficiency can be improved.

Further optionally, the application management server may encrypt the class constructor according to a preset public key.

S404. The application management server sends the compiled and encrypted application installation package to the terminal.

After encrypting the compiled application installation package, the application management server may send the compiled and encrypted application installation package to the terminal.

S405. The terminal installs the target application in a runtime environment that is based on the terminal identification information.

After receiving the compiled and encrypted application installation package, the terminal may install the target application in the runtime environment that is based on the terminal identification information. The runtime environment is obtained by the terminal by compiling a preset intermediate file of the terminal according to the terminal identification information, and the preset intermediate file may include a runtime file and a framework file.

S406. The terminal decrypts the compiled and encrypted application installation package according to a private key preset in a TrustZone, and runs the target application.

After installing the compiled and encrypted application installation package, the terminal may decrypt the compiled and encrypted application installation package according to the private key preset in the TrustZone, and run the target application.

In the application protection method shown in FIG. 4, a terminal sends an application download request for a target application to an application management server, and the application download request carries terminal identification information of the terminal. The application management server compiles an application installation package of the target application according to the terminal identification information, encrypts the compiled application installation package, and sends the compiled and encrypted application installation package to the terminal. The terminal installs the target application in a runtime environment that is based on the terminal identification information, decrypts the compiled and encrypted application installation package according to a private key preset in a TrustZone, and runs the target application. Therefore, application security can be effectively improved and stability of a software industry chain ecosystem can be effectively improved.

An embodiment of the present invention further provides a computer storage medium. The computer storage medium may store a program. When the program is executed, some or all of steps of the application protection method described in the method embodiment shown in the foregoing FIG. 1, FIG. 3, or FIG. 4 are included.

An embodiment of the present invention further provides a computer storage medium. The computer storage medium may store a program. When the program is executed, some or all of steps of the application protection method described in the method embodiment shown in any one of the foregoing FIG. 2 to FIG. 4 are included.

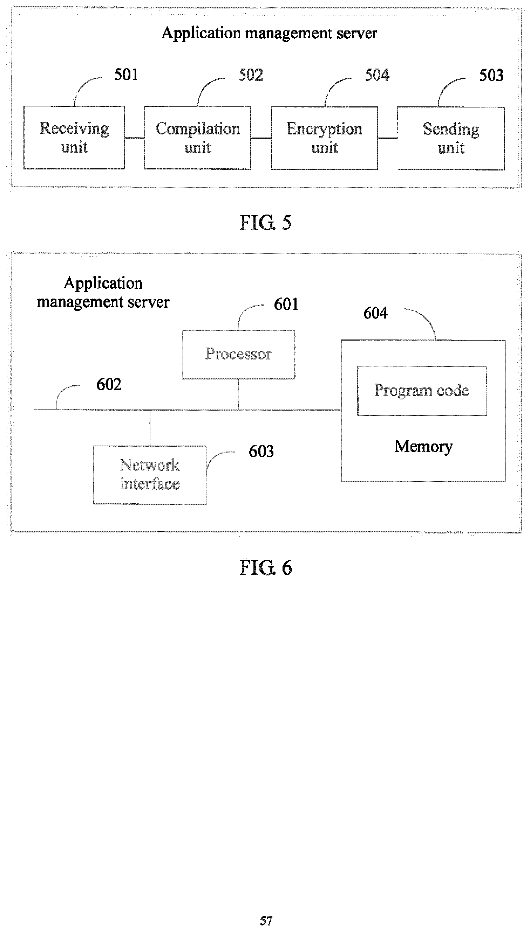

Referring to FIG. 5, FIG. 5 is a schematic structural diagram of an application management server according to an embodiment of the present invention. The application management server may be configured to implement some or all of steps of the application protection method in the method embodiment shown in FIG. 1, FIG. 3, or FIG. 4. The application management server may include at least a receiving unit 501, a compilation unit 502, and a sending unit 503.

The receiving unit 501 is configured to receive an application download request that is for a target application and that is sent by a terminal. The application download request may carry terminal identification information of the terminal.

The compilation unit 502 is configured to compile an application installation package of the target application according to the terminal identification information.

The sending unit 503 is configured to send the compiled application installation package to the terminal, so that the terminal installs the target application in a runtime environment that is based on the terminal identification information. The runtime environment is obtained by the terminal by compiling a preset intermediate file of the terminal according to the terminal identification information, and the preset intermediate file includes a runtime file and a framework file.

In an optional implementation manner, the compilation unit 502 is specifically configured to: obtain a hash value of the terminal identification information, and compile the application installation package of the target application according to the hash value.

Further optionally, when compiling the application installation package of the target application according to the hash value, the compilation unit 502 is specifically configured to: compile the application installation package of the target application according to the hash value, and generate an ABI corresponding to the hash value. The ABI may include a link address of the application installation package of the target application and a symbol table name of the application installation package of the target application.

Further optionally, when generating the ABI corresponding to the hash value, the compilation unit 502 is specifically configured to separately adjust the link address of the application installation package of the target application and the symbol table name of the application installation package of the target application according to the hash value.

Further optionally, when separately adjusting the link address of the application installation package of the target application and the symbol table name of the application installation package of the target application according to the hash value, the compilation unit 502 is specifically configured to: perform an exclusive OR operation on the link address of the application installation package of the target application and the hash value, to generate a link address of the compiled application installation package; encode the symbol table name of the application installation package of the target application; and perform an exclusive OR operation on the encoded symbol table name and the hash value, to generate a symbol table name of the compiled application installation package. For example, the compilation unit 502 may encode the symbol table name of the application installation package of the target application by means of Base64 encoding. The encoded symbol table name is a string of numbers not a character string, so that the exclusive OR operation is performed on the symbol table name and the hash value of the terminal identification information.

In an optional implementation manner, the application management server in this embodiment of the present invention may further include:
an encryption unit 504, configured to: after the compilation unit 502 compiles the application installation package of the target application according to the terminal identification information, encrypt the compiled application installation package.

The sending unit 503 is specifically configured to send the compiled and encrypted application installation package to the terminal, so that after the terminal installs the target application in the runtime environment, the terminal decrypts the compiled and encrypted application installation package according to a private key preset in a TrustZone, and runs the target application.

In this embodiment of the present invention, application security can be further improved.

Further optionally, when encrypting the compiled application installation package, the encryption unit 504 is specifically configured to: determine a constructor function in the compiled application installation package, and encrypt the constructor function.

Further optionally, the encryption unit 504 is configured to encrypt the class constructor according to a preset public key.

In the application management server shown in FIG. 5, a receiving unit 501 receives an application download request that is for a target application and that is sent by a terminal, and the application download request carries terminal identification information of the terminal; a compilation unit 502 compiles an application installation package of the target application according to the terminal identification information; and a sending unit 503 sends the compiled application installation package to the terminal, so that the terminal installs the target application in a runtime environment that is based on the terminal identification information. Therefore, application security can be effectively improved and stability of a software industry chain ecosystem can be effectively improved.

Referring to FIG. 6, FIG. 6 is a schematic structural diagram of an application management server according to another embodiment of the present invention. The application management server provided in this embodiment of the present invention may be configured to implement the method implemented in the embodiment of the present invention shown in the foregoing FIG. 1, FIG. 3, or FIG. 4. For ease of description, only parts related to this embodiment of the present invention are shown. For technical details that are not disclosed, refer to the embodiment of the present invention shown in FIG. 1, FIG. 3, or FIG. 4.

As shown in FIG. 6, the application management server may include at least one processor 601 such as a CPU, at least one network interface 603, a memory 604, and at least one communications bus 602. The communications bus 602 is configured to implement a connection and communication between these components. Optionally, the network interface 603 may include a standard wired interface and a wireless interface (for example, a Wi-Fi interface). The memory 604 may include a high-speed RAM memory, and may further include a non-volatile memory (non-volatile memory), for example, at least one disk memory. Optionally, the memory 605 may include at least one storage apparatus that is away from the foregoing processor 601. For the processor 601, reference may be made to the application management server shown in FIG. 5. The memory 604 stores a group of program code, and the processor 601 invokes the program code stored in the memory 604, and is configured to perform the following operations:
receiving, by using the network interface 603, an application download request that is for a target application and that is sent by a terminal, where the application download request may carry terminal identification information of the terminal;
compiling an application installation package of the target application according to the terminal identification information; and
sending the compiled application installation package to the terminal, so that the terminal installs the target application in a runtime environment that is based on the terminal identification information, where the runtime environment is obtained by the terminal by compiling a preset intermediate file of the terminal according to the terminal identification information, and the preset intermediate file includes a runtime file and a framework file.

In an optional implementation manner, that the processor 601 compiles the application installation package of the target application according to the terminal identification information may be specifically:
obtaining a hash value of the terminal identification information; and
compiling the application installation package of the target application according to the hash value, where compilation refers to converting a source program wrote by using an advanced program design language into a target program represented by using a machine language.

Further optionally, that the processor 601 compiles the application installation package of the target application according to the hash value may be specifically:
compiling the application installation package of the target application according to the hash value, and generating an ABI corresponding to the hash value, where the ABI may include a link address of the application installation package of the target application and a symbol table name of the application installation package of the target application.

Further optionally, that the processor 601 generates the ABI corresponding to the hash value may be specifically:
separately adjusting the link address of the application installation package of the target application and the symbol table name of the application installation package of the target application according to the hash value.

Further optionally, that the processor 601 separately adjusts the link address of the application installation package of the target application and the symbol table name of the application installation package of the target application according to the hash value may be specifically:
performing an exclusive OR operation on the link address of the application installation package of the target application and the hash value, to generate a link address of the compiled application installation package; and
encoding the symbol table name of the application installation package of the target application, and performing an exclusive OR operation on the encoded symbol table name and the hash value, to generate a symbol table name of the compiled application installation package. For example, the processor 601 may encode the symbol table name of the application installation package of the target application by means of Base64 encoding. The encoded symbol table name is a string of numbers not a character string, so that the exclusive OR operation is performed on the symbol table name and the hash value of the terminal identification information.

In an optional implementation manner, after compiling the application installation package of the target application according to the terminal identification information, the processor 601 may further perform the following operations:
encrypting the compiled application installation package; and
sending, by using the network interface 603, the compiled and encrypted application installation package to the terminal, so that after the terminal installs the target application in the runtime environment, the terminal decrypts the compiled and encrypted application installation package according to a private key preset in a TrustZone, and runs the target application.

In this embodiment of the present invention, application security can be further improved.

Further optionally, that the processor 601 encrypts the compiled application installation package may be specifically:
determining a class constructor in the compiled application installation package, and encrypting the class constructor.

Further optionally, that the processor 601 encrypts the class constructor may be specifically:
encrypting the class constructor according to a preset public key.

Specifically, the application management server described in this embodiment of the present invention may be configured to implement a part or all of the procedure of the application protection method embodiment described in FIG. 1, FIG. 3, or FIG. 4.

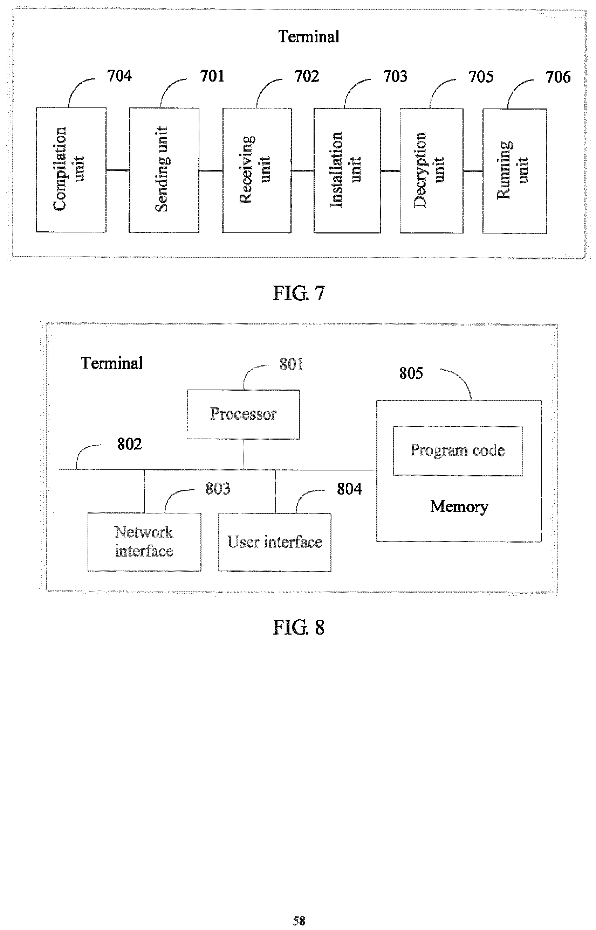

Referring to FIG. 7, FIG. 7 is a schematic structural diagram of a terminal according to an embodiment of the present invention. The terminal may be configured to implement some or all of steps of the application protection methods in the method embodiments shown in FIG. 2 to FIG. 4. The terminal may include at least a sending unit 701, a receiving unit 702, and an installation unit 703.

The sending unit 701 is configured to send an application download request for a target application to an application management server, and the application download request carries terminal identification information of the terminal, so that the application management server compiles an application installation package of the target application according to the terminal identification information.

The receiving unit 702 is configured to receive the compiled application installation package sent by the application management server.

The installation unit 703 is configured to install, according to the compiled application installation package, the target application in a runtime environment that is based on the terminal identification information, and the runtime environment is obtained by compiling a preset intermediate file according to the terminal identification information, and the preset intermediate file includes a runtime file and a framework file.

In an optional implementation manner, the terminal in this embodiment of the present invention may further include:
a compilation unit 704, configured to: before the sending unit 701 sends the application download request for the target application to the application management server, compile the preset intermediate file according to the terminal identification information preset in a TrustZone, where the compiled intermediate file constitutes the runtime environment that is based on the terminal identification information.

Further optionally, the compilation unit 704 is specifically configured to: before the sending unit 701 sends the application download request for the target application to the application management server, obtain a hash value of the terminal identification information, and compile the preset intermediate file according to the hash value.

Further optionally, when compiling the preset intermediate file according to the hash value, the compilation unit 704 is specifically configured to: compile the preset intermediate file according to the hash value, and generate an ABI corresponding to the hash value.

Further optionally, when generating the ABI corresponding to the hash value, the compilation unit 704 is specifically configured to separately adjust a link address and a symbol table name of the preset intermediate file according to the hash value.

In this embodiment of the present invention, an existing compilation algorithm is adjusted. In the existing compilation algorithm, preset intermediate files in different terminals have a same link address and a same symbol table name. In this embodiment of the present invention, the link address of the preset intermediate file and the symbol table name of the preset intermediate file are adjusted according to the hash value of the terminal identification information, and compiled preset intermediate files in different terminals have different link addresses and different symbol table names, so that the runtime environment corresponding to the terminal identification information is constituted.

Further optionally, when separately adjusting the link address of the preset intermediate file and the symbol table name of the preset intermediate file according to the hash value, the compilation unit 704 is specifically configured to: perform an exclusive OR operation on the link address of the preset intermediate file and the hash value, to generate a link address of the compiled intermediate file; encode the symbol table name of the preset intermediate file; and perform an exclusive OR operation on the encoded symbol table name and the hash value, to generate a symbol table name of the compiled intermediate file. For example, the compilation unit 704 may encode the symbol table name of the preset intermediate file by means of Base64 encoding. The encoded symbol table name is a string of numbers not a character string, so that the exclusive OR operation is performed on the symbol table name and the hash value.

In an optional implementation manner, the sending unit 701 is specifically configured to send the application download request to the application management server, so that the application management server compiles the application installation package of the target application according to the terminal identification information, and the application management server encrypts the compiled application installation package.

The receiving unit 702 is specifically configured to receive the compiled and encrypted application installation package sent by the application management server.

In this embodiment of the present invention, application security can be further improved.

Further optionally, the terminal in this embodiment of the present invention may further include:
a decryption unit 705, configured to: after the installation unit 703 installs the target application in the runtime environment that is based on the terminal identification information, decrypt the compiled and encrypted application installation package according to a private key preset in the TrustZone; and
a runtime unit 706, configured to run the target application.

In this embodiment of the present invention, the private key is stored in the TrustZone, so that the private key is avoided from software attack, secrecy performance of the private key can be improved, and further, application security is improved.

In the terminal shown in FIG. 7, a sending unit 701 sends an application download request for a target application to an application management server, and the application download request carries terminal identification information of the terminal, so that the application management server compiles an application installation package of the target application according to the terminal identification information; a receiving unit 702 receives the compiled application installation package sent by the application management server; and an installation unit 703 installs, according to the compiled application installation package, the target application in a runtime environment that is based on the terminal identification information. Therefore, application security can be effectively improved and stability of a software industry chain ecosystem can be effectively improved.

Referring to FIG. 8, FIG. 8 is a schematic structural diagram of a terminal according to another embodiment of the present invention. The terminal provided in this embodiment of the present invention may be configured to implement the methods implemented in the embodiments of the present invention shown in the foregoing FIG. 2 to FIG. 4. For ease of description, only parts related to this embodiment of the present invention are shown. For technical details that are not disclosed, refer to the embodiments of the present invention shown in FIG. 2 to FIG. 4.

As shown in FIG. 8, the terminal may include at least one processor 801 such as a CPU, at least one network interface 803, a user interface 804, a memory 805, and at least one communications bus 802. The communications bus 802 is configured to implement a connection and communication between these components. Optionally, the network interface 803 may include a standard wired interface and a wireless interface (for example, a WI-FI interface). The user interface 804 may include a display and a keyboard. Optionally, the user interface 804 may further include a standard wired interface and a wireless interface. The memory 805 may include a high-speed RAM memory, and may further include a non-volatile memory, for example, at least one disk memory. Optionally, the memory 805 may include at least one storage apparatus that is away from the foregoing processor 801. For the processor 801, reference may be made to the terminal shown in FIG. 7. The memory 805 stores a group of program code, and the processor 801 invokes the program code stored in the memory 805, and is configured to perform the following operations:
sending, by using the network interface 803, an application download request for a target application to an application management server, where the application download request carries terminal identification information of the terminal, so that the application management server compiles an application installation package of the target application according to the terminal identification information;
receiving, by using the network interface 803, the compiled application installation package sent by the application management server; and
installing, according to the compiled application installation package, the target application in a runtime environment that is based on the terminal identification information, where the runtime environment is obtained by compiling a preset intermediate file according to the terminal identification information, and the preset intermediate file includes a runtime file and a framework file.

In an optional implementation manner, before sending, by using the network interface 803, the application download request for the target application to the application management server, the processor 801 may further perform the following operation:
compiling the preset intermediate file according to the terminal identification information preset in a TrustZone, where the compiled intermediate file constitutes the runtime environment that is based on the terminal identification information, and the preset intermediate file may include a runtime file and a framework file.

Further optionally, that the processor 801 compiles the preset intermediate file according to the terminal identification information preset in the TrustZone may be specifically:
obtaining a hash value of the terminal identification information; and
compiling the preset intermediate file according to the hash value.

Further optionally, that the processor 801 compiles the preset intermediate file according to the hash value may be specifically:
compiling the preset intermediate file according to the hash value, and generating an ABI corresponding to the hash value.

Further optionally, that the processor 801 generates the ABI corresponding to the hash value may be specifically:
separately adjusting a link address and a symbol table name of the preset intermediate file according to the hash value.

Further optionally, that the processor 801 separately adjusts the link address of the preset intermediate file and the symbol table name of the preset intermediate file according to the hash value may be specifically:
performing an exclusive OR operation on the link address of the preset intermediate file and the hash value, to generate a link address of the compiled preset intermediate file; and
encoding the symbol table name of the preset intermediate file, and performing an exclusive OR operation on the encoded symbol table name and the hash value, to generate a symbol table name of the compiled preset intermediate file. For example, the processor 801 may encode the symbol table name of the preset intermediate file by means of Base64 encoding. The encoded symbol table name is a string of numbers not a character string, so that the exclusive OR operation is performed on the symbol table name and the hash value.

In an optional implementation manner, that the processor 801 sends the application download request for the target application to the application management server may be specifically:
sending the application download request to the application management server, so that the application management server compiles the application installation package of the target application according to the terminal identification information, and the application management server encrypts the compiled application installation package.

Further, that the processor 801 receives the compiled application installation package sent by the application management server may be specifically:
receiving the compiled and encrypted application installation package sent by the application management server.

In this embodiment of the present invention, application security can be further improved.

Further optionally, after installing the target application in the runtime environment that is based on the terminal identification information, the processor 801 may be further configured to perform the following operations:
decrypting the compiled and encrypted application installation package according to a private key preset in the TrustZone; and
runtime the target application.

Specifically, the terminal described in this embodiment of the present invention may be configured to implement a part or all of the procedure of the application protection method embodiments described in FIG. 2 to FIG. 4.

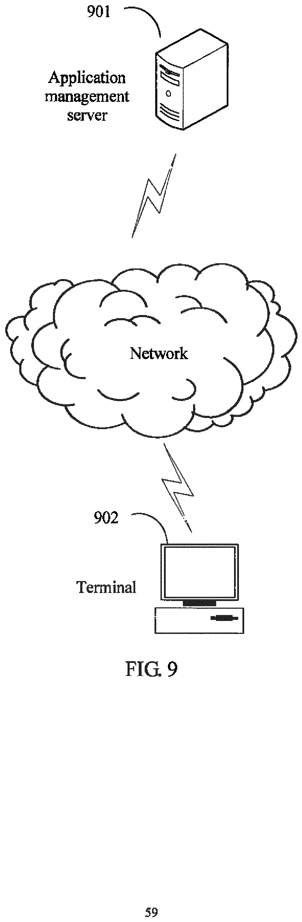

Referring to FIG. 9, FIG. 9 is a schematic structural diagram of an application protection system according to an embodiment of the present invention. As shown in the figure, the application protection system in this embodiment of the present invention may include at least an application management server 901 and a terminal 902.

The terminal 902 is configured to send an application download request for a target application to the application management server 901, and the application download request carries terminal identification information of the terminal.

The application management server 901 is configured to compile an application installation package of the target application according to the terminal identification information.

The terminal 902 is further configured to: receive the compiled application installation package sent by the application management server 901; and install, according to the compiled application installation package, the target application in a runtime environment that is based on the terminal identification information. The runtime environment is obtained by the terminal 902 by compiling a preset intermediate file of the terminal 902 according to the terminal identification information, and the preset intermediate file includes a runtime file and a framework file.

In an optional embodiment, the application management server 901 may obtain a hash value of the terminal identification information, and compile the application installation package of the target application according to the hash value.

Further optionally, the application management server 901 may compile the application installation package of the target application according to the hash value, and generate an ABI corresponding to the hash value. The ABI may include a link address of the application installation package of the target application and a symbol table name of the application installation package of the target application.

Further optionally, the application management server 901 may separately adjust the link address of the application installation package of the target application and the symbol table name of the application installation package of the target application according to the hash value.

Further optionally, the application management server 901 may perform an exclusive OR operation on the link address of the application installation package of the target application and the hash value, to generate a link address of the compiled application installation package. The application management server 901 may encode the symbol table name of the application installation package of the target application by means of, for example, Base64 encoding, and perform an exclusive OR operation on the encoded symbol table name and the hash value, to generate a symbol table name of the compiled application installation package.

In an optional embodiment, before installing the compiled application installation package, the terminal 902 may compile the preset intermediate file according to the terminal identification information preset in a TrustZone, and the compiled preset intermediate file constitutes the runtime environment that is based on the terminal identification information.

Further optionally, the terminal 902 may obtain a hash value of the terminal identification information, and compile the preset intermediate file according to the hash value. Further optionally, the terminal 902 may compile the preset intermediate file according to the hash value, and generate an ABI corresponding to the hash value. The ABI may include a link address and a symbol table name of the preset intermediate file.

Further optionally, the terminal 902 may separately adjust the link address of the preset intermediate file and the symbol table name of the preset intermediate file according to the hash value.

Further optionally, the terminal 902 may perform an exclusive OR operation on the link address of the preset intermediate file and the hash value, to generate a link address of the compiled preset intermediate file. The terminal 902 may encode the symbol table name of the preset intermediate file by means of, for example, Base64 encoding, and perform an exclusive OR operation on the encoded symbol table name and the hash value, to generate a symbol table name of the compiled preset intermediate file.

In an optional embodiment, after compiling the application installation package of the target application according to the terminal identification information, the application management server 901 may encrypt the compiled application installation package.

The terminal 902 receives the compiled and encrypted application installation package sent by the application management server 901.

After installing the target application in the runtime environment, the terminal 902 decrypts the compiled and encrypted application installation package according to a private key preset in the TrustZone and runs the target application.

Further optionally, the application management server 901 may determine a class constructor in the compiled application installation package and encrypt the determined class constructor. The class constructor refers to defining an initiated state when a class object is created. In a runtime process of the application installation package, the class constructor is executed more than 0 times, and there is a relatively few quantity of execution times. The class constructor is encrypted instead of all functions, so that processing efficiency can be improved.

Further optionally, the application management server 901 may encrypt the class constructor according to a preset public key.

Optionally, after installing the encrypted application installation package, the terminal 902 may decrypt the compiled and encrypted application installation package according to a private key preset in the TrustZone, and run the target application.

In the application protection system shown in FIG. 9, a terminal 902 sends an application download request for a target application to an application management server 901, and the application download request carries terminal identification information of the terminal; the application management server 901 compiles an application installation package of the target application according to the terminal identification information, and sends the compiled application installation package to the terminal 902; and the terminal 902 installs, according to the compiled application installation package, the target application in a runtime environment that is based on the terminal identification information. Therefore, application security can be effectively improved and stability of a software industry chain ecosystem can be effectively improved.

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may include: a magnetic disk, an optical disc, a read-only memory (Read-Only Memory, ROM), or a random access memory (Random Access Memory, RAM).

It should be noted that, in the foregoing embodiments, the description of each embodiment has respective focuses. For a part that is not described in detail in an embodiment, reference may be made to related descriptions in other embodiments. In addition, a person skilled in the art should also understand that the embodiments described in this specification are all embodiments, and the related actions and units are not necessarily mandatory to the present invention.

What is disclosed above are merely example embodiments of the present invention, and certainly is not intended to limit the protection scope of the present invention.

## Claims

1. An application protection method, comprising:
sending (S201) an application download request for a target application to an application management server, wherein the application download request carries terminal identification information which identify a unique terminal;
receiving (S202) the compiled application installation package sent by the application management server, wherein the application installation package is compiled according to the terminal identification information carried in the application downloads request; and
installing (S203), according to the compiled application installation package, the target application in a runtime environment that is based on the terminal identification information, wherein the runtime environment is obtained by compiling a preset intermediate file according to the terminal identification information, and the preset intermediate file comprises a runtime file and a framework file wherein the compiled preset intermediate file constitutes the runtime environment that is based on the terminal identification information,
wherein the compiling the preset intermediate file according to the terminal identification information preset in an architecture solution comprises:
obtaining a hash value of the terminal identification information; and
compiling the preset intermediate file according to the hash value, and generating an application binary interface, ABI, corresponding to the hash value.

2. The method according to claim 1, wherein the generating an ABI corresponding to the hash value comprises:
separately adjusting a link address and a symbol table name of the preset intermediate file according to the hash value.

3. The method according to claim 2, wherein the separately adjusting a link address and a symbol table name of the preset intermediate file according to the hash value comprises:
performing an exclusive OR operation on the link address of the preset intermediate file and the hash value, to generate a link address of the compiled preset intermediate file;
encoding the symbol table name of the preset intermediate file; and
performing an exclusive OR operation on the encoded symbol table name and the hash value, to generate a symbol table name of the compiled preset intermediate file.

4. The method according to any one of claims 1 to 3, wherein the sending (S201) an application download request for a target application to an application management server comprises:
sending the application download request to the application management server, so that the application management server compiles the application installation package of the target application according to the terminal identification information, and the application management server encrypts the compiled application installation package; and
the receiving (S202) the compiled application installation package sent by the application management server comprises:
receiving the compiled and encrypted application installation package sent by the application management server.

5. The method according to claim 4, after the installing (S203) the target application in a runtime environment that is based on the terminal identification information, further comprising:
decrypting the compiled and encrypted application installation package according to a private key preset in the architecture solution; and
running the target application.

6. An application protection method, comprising:
receiving (S101) an application download request that is for a target application and that is sent by a terminal, wherein the application download request carries terminal identification information which uniquely identify the terminal;
compiling (S102) an application installation package of the target application according to the terminal identification information; and
sending (S103) the compiled application installation package to the terminal, to enable the terminal to install the target application in a runtime environment that is based on the terminal identification information, wherein the runtime environment is obtained by the terminal by compiling a preset intermediate file of the terminal according to the terminal identification information, and the preset intermediate file comprises a runtime file and a framework file,
wherein the compiling an application installation package of the target application according to the terminal identification information comprises:
obtaining a hash value of the terminal identification information; and
compiling the application installation package of the target application according to the hash value, and generating an application binary interface, ABI, corresponding to the hash value.

7. The method according to claim 6, wherein the generating an ABI corresponding to the hash value comprises:
separately adjusting a link address of the application installation package of the target application and a symbol table name of the application installation package of the target application according to the hash value.

8. The method according to claim 7, wherein the separately adjusting a link address of the application installation package of the target application and a symbol table name of the application installation package of the target application according to the hash value comprises:
performing an exclusive OR operation on the link address of the application installation package of the target application and the hash value, to generate a link address of the compiled application installation package;
encoding the symbol table name of the application installation package of the target application; and
performing an exclusive OR operation on the encoded symbol table name and the hash value, to generate a symbol table name of the compiled application installation package.

9. The method according to any one of claims 6 to 8, after the compiling an application installation package of the target application according to the terminal identification information, further comprising:
encrypting the compiled application installation package; and
the sending the compiled application installation package to the terminal comprises:
sending the compiled and encrypted application installation package to the terminal, so that after the terminal installs the target application in the runtime environment, the terminal decrypts the compiled and encrypted application installation package according to a private key preset in an architecture solution, and runs the target application.

10. The method according to claim 9, wherein the encrypting the compiled application installation package comprises:
determining a class constructor in the compiled application installation package; and
encrypting the class constructor.

11. A terminal, comprising:
a sending unit (701), configured to send an application download request for a target application to an application management server, wherein the application download request carries terminal identification information which uniquely identify the terminal, so that the application management server is enabled to compile an application installation package of the target application according to the terminal identification information;
a receiving unit (702), configured to receive the compiled application installation package sent by the application management server; and
an installation unit (703), configured to install, according to the compiled application installation package, the target application in a runtime environment that is based on the terminal identification information, wherein the runtime environment is obtained by compiling a preset intermediate file according to the terminal identification information, and the preset intermediate file comprises a runtime file and a framework file wherein the compiled preset intermediate file constitutes the runtime environment that is based on the terminal identification information,
wherein the compiling the preset intermediate file according to the terminal identification information preset in an architecture solution comprises:
obtaining a hash value of the terminal identification information; and
compiling the preset intermediate file according to the hash value, and generating an application binary interface, ABI, corresponding to the hash value.

12. An application management server, comprising:
a receiving unit (501), configured to receive an application download request that is for a target application and that is sent by a terminal, wherein the application download request carries terminal identification information which uniquely identify the terminal;
a compilation unit (502), configured to compile an application installation package of the target application according to the terminal identification information; and
a sending unit (503), configured to send the compiled application installation package to the terminal, so that the terminal installs the target application in a runtime environment that is based on the terminal identification information, wherein the runtime environment is obtained by the terminal by compiling a preset intermediate file of the terminal according to the terminal identification information, and the preset intermediate file comprises a runtime file and a framework file,
wherein the compiling an application installation package of the target application according to the terminal identification information comprises:
obtaining a hash value of the terminal identification information; and
compiling the application installation package of the target application according to the hash value, and generating an application binary interface, ABI, corresponding to the hash value.

## Patentansprüche

1. Anwendungs-Schutzverfahren, umfassend:
Senden (S201) einer Anwendungs-Herunterladeanforderung für eine Zielanwendung zu einem Anwendungs-Verwaltungsserver, wobei die Anwendungs-Herunterladeanforderung Endgeräte-Identifikationsinformationen umfasst, die ein einzigartiges Endgerät identifizieren;
Empfangen (S202) des durch den Anwendungs-Verwaltungsserver gesendeten zusammengestellten Anwendungs-Installationspakets, wobei das Anwendungs-Installationspaket gemäß den in der Anwendungs-Herunterladeanforderung geführten Endgeräte-Identifikationsinformationen zusammengestellt wird; und
Installieren (S203) der Zielanwendung in einer Laufzeitumgebung, die auf den Endgeräte-Identifikationsinformationen basiert, gemäß dem zusammengestellten Anwendungs-Installationspaket, wobei die Laufzeitumgebung durch Zusammenstellen einer voreingestellten Zwischendatei gemäß den Endgeräte-Identifikationsinformationen erhalten wird und die voreingestellte Zwischendatei eine Laufzeitdatei und eine Rahmenbedingungsdatei umfasst, wobei die zusammengestellte voreingestellte Zwischendatei die Laufzeitumgebung darstellt, die auf den Endgeräte-Identifikationsinformationen basiert,
wobei das Zusammenstellen der voreingestellten Zwischendatei gemäß den in einer Architekturlösung voreingestellten Endgeräte-Identifikationsinformationen Folgendes umfasst:
Erhalten eines Hash-Werts der Endgeräte-Identifikationsinformationen; und
Zusammenstellen der voreingestellten Zwischendatei gemäß dem Hash-Wert und Erzeugen einer dem Hash-Wert entsprechenden Anwendungs-Binärschnittstelle ABI.

2. Verfahren nach Anspruch 1, wobei das Erzeugen einer dem Hash-Wert entsprechenden ABI Folgendes umfasst:
getrenntes Einstellen einer Link-Adresse und eines Symboltabellennamens der voreingestellten Zwischendatei gemäß dem Hash-Wert.

3. Verfahren nach Anspruch 2, wobei das getrennte Einstellen einer Link-Adresse und eines Symboltabellennamens der voreingestellten Zwischendatei gemäß dem Hash-Wert Folgendes umfasst:
Ausführen einer Exklusiv-ODER-Operation an der Link-Adresse der voreingestellten Zwischendatei und dem Hash-Wert, um eine Link-Adresse der zusammengestellten voreingestellten Zwischendatei zu erzeugen;
Codieren des Symboltabellennamens der voreingestellten Zwischendatei; und
Ausführen einer Exklusiv-ODER-Operation an dem codierten Symboltabellennamen und dem Hash-Wert, um einen Symboltabellennamen der zusammengestellten voreingestellten Zwischendatei zu erzeugen.

4. Verfahren nach einem der Ansprüche 1 bis 3, wobei das Senden (S201) einer Anwendungs-Herunterladeanforderung für eine Zielanwendung zu einem Anwendungs-Verwaltungsserver Folgendes umfasst:
Senden der Anwendungs-Herunterladeanforderung zu dem Anwendungs-Verwaltungsserver dergestalt, dass der Anwendungs-Verwaltungsserver das Anwendungs-Installationspaket der Zielanwendung gemäß den Endgeräte-Identifikationsinformationen zusammenstellt und der Anwendungs-Verwaltungsserver das zusammengestellte Anwendungs-Installationspaket verschlüsselt; und
das Empfangen (S202) des durch den Anwendungs-Verwaltungsserver gesendeten zusammengestellten Anwendungs-Installationspakets Folgendes umfasst:
Empfangen des durch den Anwendungs-Verwaltungsserver gesendeten zusammengestellten und verschlüsselten Anwendungs-Installationspakets.

5. Verfahren nach Anspruch 4, das nach dem Installieren (S203) der Zielanwendung in einer Laufzeitumgebung, die auf den Endgeräte-Identifikationsinformationen basiert, ferner Folgendes umfasst:
Entschlüsseln des zusammengestellten und verschlüsselten Anwendungs-Installationspakets gemäß einem in der Architekturlösung voreingestellten privaten Schlüssel; und
Laufenlassen der Zielanwendung.

6. Anwendungs-Schutzverfahren, umfassend:
Empfangen (S101) einer Anwendungs-Herunterladeanforderung, die für eine Zielanwendung ist und die durch ein Endgerät gesendet wird, wobei die Anwendungs-Herunterladeanforderung Endgeräte-Identifikationsinformationen führt, die das Endgerät eindeutig identifizieren;
Zusammenstellen (S102) eines Anwendungs-Installationspakets der Zielanwendung gemäß den Endgeräte-Identifikationsinformationen; und
Senden (S103) des zusammengestellten Anwendungs-Installationspakets zu dem Endgerät, um es dem Endgerät zu ermöglichen, die Zielanwendung in einer Laufzeitumgebung zu installieren, die auf den Endgeräte-Identifikationsinformationen basiert, wobei die Laufzeitumgebung durch das Endgerät durch Zusammenstellen einer voreingestellten Zwischendatei des Endgeräts gemäß den Endgeräte-Identifikationsinformationen erhalten wird und die voreingestellte Zwischendatei eine Laufzeitdatei und eine Rahmenbedingungsdatei umfasst,
wobei das Zusammenstellen eines Anwendungs-Installationspakets der Zielanwendung gemäß den Endgeräte-Identifikationsinformationen Folgendes umfasst:
Erhalten eines Hash-Werts der Endgeräte-Identifikationsinformationen; und
Zusammenstellen des Anwendungs-Installationspakets der Zielanwendung gemäß dem Hash-Wert und Erzeugen einer dem Hash-Wert entsprechenden Anwendungs-Binärschnittstelle ABI.

7. Verfahren nach Anspruch 6, wobei das Erzeugen einer dem Hash-Wert entsprechenden ABI Folgendes umfasst:
getrenntes Einstellen einer Link-Adresse des Anwendungs-Installationspakets der Zielanwendung und eines Symboltabellennamens des Anwendungs-Installationspakets der Zielanwendung gemäß dem Hash-Wert.

8. Verfahren nach Anspruch 7, wobei das getrennte Einstellen einer Link-Adresse des Anwendungs-Installationspakets der Zielanwendung und eines Symboltabellennamens des Anwendungs-Installationspakets der Zielanwendung gemäß dem Hash-Wert Folgendes umfasst:
Ausführen einer Exklusiv-ODER-Operation an der Link-Adresse des Anwendungs-Installationspakets der Zielanwendung und dem Hash-Wert, um eine Link-Adresse des zusammengestellten Anwendungs-Installationspakets zu erzeugen;
Codieren des Symboltabellennamens des Anwendungs-Installationspakets der Zielanwendung; und
Ausführen einer Exklusiv-ODER-Operation an dem codierten Symboltabellennamen und dem Hash-Wert, um einen Symboltabellennamen des zusammengestellten Anwendungs-Installationspakets zu erzeugen.

9. Verfahren nach einem der Ansprüche 6 bis 8, das nach dem Zusammenstellen eines Anwendungs-Installationspakets der Zielanwendung gemäß den Endgeräte-Identifikationsinformationen ferner Folgendes umfasst:
Verschlüsseln des zusammengestellten Anwendungs-Installationspakets; und
das Senden des zusammengestellten Anwendungs-Installationspakets zu dem Endgerät umfasst Folgendes:
Senden des zusammengestellten und verschlüsselten Anwendungs-Installationspakets zu dem Endgerät, sodass, nachdem das Endgerät die Zielanwendung in der Laufzeitumgebung installiert, das Endgerät das zusammengestellte und verschlüsselte Anwendungs-Installationspaket gemäß einem in einer Architekturlösung voreingestellten privaten Schlüssel entschlüsselt und die Zielanwendung laufen lässt.

10. Verfahren nach Anspruch 9, wobei das Verschlüsseln des zusammengestellten Anwendungs-Installationspakets Folgendes umfasst:
Bestimmen eines Klassenkonstruktors in dem zusammengestellten Anwendungs-Installationspaket; und
Verschlüsseln des Klassenkonstruktors.

11. Endgerät, umfassend:
eine Sendeeinheit (701), ausgelegt zum Senden einer Anwendungs-Herunterladeanforderung für eine Zielanwendung zu einem Anwendungs-Verwaltungsserver, wobei die Anwendungs-Herunterladeanforderung Endgeräte-Identifikationsinformationen führt, die das Endgerät eindeutig identifizieren, sodass der Anwendungs-Verwaltungsserver befähigt wird, ein Anwendungs-Installationspaket der Zielanwendung gemäß den Endgeräte-Identifikationsinformationen zusammenzustellen;
eine Empfangseinheit (702), ausgelegt zum Empfangen des durch den Anwendungs-Verwaltungsserver gesendeten zusammengestellten Anwendungs-Installationspakets; und
eine Installationseinheit (703), ausgelegt zum Installieren der Zielanwendung in einer Laufzeitumgebung, die auf den Endgeräte-Identifikationsinformationen basiert, gemäß dem zusammengestellten Anwendungs-Installationspaket, wobei die Laufzeitumgebung durch Zusammenstellen einer voreingestellten Zwischendatei gemäß den Endgeräte-Identifikationsinformationen erhalten wird und die voreingestellte Zwischendatei eine Laufzeitdatei und eine Rahmenbedingungsdatei umfasst, wobei die zusammengestellte voreingestellte Zwischendatei die Laufzeitumgebung darstellt, die auf den Endgeräte-Identifikationsinformationen basiert,
wobei das Zusammenstellen der voreingestellten Zwischendatei gemäß den in einer Architekturlösung voreingestellten Endgeräte-Identifikationsinformationen Folgendes umfasst:
Erhalten eines Hash-Werts der Endgeräte-Identifikationsinformationen; und
Zusammenstellen der voreingestellten Zwischendatei gemäß dem Hash-Wert und Erzeugen einer dem Hash-Wert entsprechenden Anwendungs-Binärschnittstelle ABI.

12. Anwendungs-Verwaltungsserver, umfassend:
eine Empfangseinheit (501), ausgelegt zum Empfangen einer Anwendungs-Herunterladeanforderung, die für eine Zielanwendung ist und die durch ein Endgerät gesendet wird, wobei die Anwendungs-Herunterladeanforderung Endgeräte-Identifikationsinformationen führt, die das Endgerät eindeutig identifizieren;
eine Zusammenstelleinheit (502), ausgelegt zum Zusammenstellen eines Anwendungs-Installationspakets der Zielanwendung gemäß den Endgeräte-Identifikationsinformationen; und
eine Sendeeinheit (503), ausgelegt zum Senden des zusammengestellten Anwendungs-Installationspakets zu dem Endgerät, sodass das Endgerät die Zielanwendung in einer Laufzeitumgebung installiert, die auf den Endgeräte-Identifikationsinformationen basiert, wobei die Laufzeitumgebung durch das Endgerät erhalten wird durch Zusammenstellen einer voreingestellten Zwischendatei des Endgeräts gemäß den Endgeräte-Identifikationsinformationen, und die voreingestellte Zwischendatei eine Laufzeitdatei und eine Rahmenbedingungsdatei umfasst,
wobei das Zusammenstellen eines Anwendungs-Installationspakets der Zielanwendung gemäß den Endgeräte-Identifikationsinformationen Folgendes umfasst:
Erhalten eines Hash-Werts der Endgeräte-Identifikationsinformationen; und
Zusammenstellen des Anwendungs-Installationspakets der Zielanwendung gemäß dem Hash-Wert und Erzeugen einer dem Hash-Wert entsprechenden Anwendungs-Binärschnittstelle ABI.

## Revendications

1. Procédé de protection d'application, comprenant :
l'envoi (S201) d'une demande de téléchargement d'application concernant une application cible à un serveur de gestion d'applications, dans lequel la demande de téléchargement d'application porte des informations d'identification de terminal qui identifient un terminal unique ;
la réception (S202) du progiciel compilé d'installation d'application envoyé par le serveur de gestion d'applications, dans lequel le progiciel d'installation d'application est compilé selon les informations d'identification de terminal portées dans la demande de téléchargement d'application ; et
l'installation (S203), selon le progiciel compilé d'installation d'application, de l'application cible dans un environnement d'exécution qui est fondé sur les informations d'identification de terminal, dans lequel l'environnement d'exécution est obtenu en compilant un fichier intermédiaire prédéfini selon les informations d'identification de terminal, et le fichier intermédiaire prédéfini comprend un fichier d'exécution et un fichier cadre dans lequel le fichier intermédiaire prédéfini compilé constitue l'environnement d'exécution qui est fondé sur les informations d'identification de terminal,
dans lequel la compilation du fichier intermédiaire prédéfini selon les informations d'identification de terminal prédéfinies dans une solution d'architecture comprend :
l'obtention d'une valeur de hachage des informations d'identification de terminal ; et
la compilation du fichier intermédiaire prédéfini selon la valeur de hachage, et la génération d'une interface binaire d'application, ABI, correspondant à la valeur de hachage.

2. Procédé selon la revendication 1, dans lequel la génération d'une ABI correspondant à la valeur de hachage comprend :
l'ajustement séparé d'une adresse de lien et d'un nom de table de symboles du fichier intermédiaire prédéfini selon la valeur de hachage.

3. Procédé selon la revendication 2, dans lequel l'ajustement séparé d'une adresse de lien et d'un nom de table de symboles du fichier intermédiaire prédéfini selon la valeur de hachage comprend :
la réalisation d'une opération OU exclusif sur l'adresse de lien du fichier intermédiaire prédéfini et la valeur de hachage, pour générer une adresse de lien du fichier intermédiaire prédéfini compilé ;
le codage du nom de table de symboles du fichier intermédiaire prédéfini ; et
la réalisation d'une opération OU exclusif sur le nom codé de table de symboles et la valeur de hachage, pour générer un nom de table de symboles du fichier intermédiaire prédéfini compilé.

4. Procédé selon l'une quelconque des revendications 1 à 3, dans lequel l'envoi (S201) d'une demande de téléchargement d'application concernant une application cible à un serveur de gestion d'applications comprend :
l'envoi de la demande de téléchargement d'application au serveur de gestion d'applications, de telle façon que le serveur de gestion d'applications compile le progiciel d'installation d'application de l'application cible selon les informations d'identification de terminal, et le serveur de gestion d'applications chiffre le progiciel compilé d'installation d'application ; et
la réception (S202) du progiciel compilé d'installation d'application envoyé par le serveur de gestion d'applications comprend :
la réception du progiciel compilé et chiffré d'installation d'application envoyé par le serveur de gestion d'applications.

5. Procédé selon la revendication 4, après l'installation (S203) de l'application cible dans un environnement d'exécution qui est fondé sur les informations d'identification de terminal, comprenant en outre :
le déchiffrement du progiciel compilé et chiffré d'installation d'application selon une clef privée, prédéfinie dans la solution d'architecture ; et
l'exécution de l'application cible.

6. Procédé de protection d'application, comprenant :
la réception (S 101) d'une demande de téléchargement d'application qui concerne une application cible et qui est envoyée par un terminal, dans lequel la demande de téléchargement d'application porte des informations d'identification de terminal qui identifient le terminal de façon unique ;
la compilation (S102) d'un progiciel d'installation d'application de l'application cible selon les informations d'identification de terminal ; et
l'envoi (S103) du progiciel compilé d'installation d'application au terminal, pour permettre au terminal d'installer l'application cible dans un environnement d'exécution qui est fondé sur les informations d'identification de terminal, dans lequel l'environnement d'exécution est obtenu par le terminal en compilant un fichier intermédiaire prédéfini du terminal selon les informations d'identification de terminal, et le fichier intermédiaire prédéfini comprend un fichier d'exécution et un fichier cadre, dans lequel la compilation d'un progiciel d'installation d'application de l'application cible selon les informations d'identification de terminal comprend :
l'obtention d'une valeur de hachage des informations d'identification de terminal ; et
la compilation du progiciel d'installation d'application de l'application cible selon la valeur de hachage, et la génération d'une interface binaire d'application, ABI, correspondant à la valeur de hachage.

7. Procédé selon la revendication 6, dans lequel la génération d'une ABI correspondant à la valeur de hachage comprend :
l'ajustement séparé d'une adresse de lien du progiciel d'installation d'application de l'application cible et d'un nom de table de symboles du progiciel d'installation d'application de l'application cible selon la valeur de hachage.

8. Procédé selon la revendication 7, dans lequel l'ajustement séparé d'une adresse de lien du progiciel d'installation d'application de l'application cible et d'un nom de table de symboles du progiciel d'installation d'application de l'application cible selon la valeur de hachage comprend :
la réalisation d'une opération OU exclusif sur l'adresse de lien du progiciel d'installation d'application de l'application cible et la valeur de hachage, pour générer une adresse de lien du progiciel compilé d'installation d'application ;
le codage du nom de table de symboles du progiciel d'installation d'application de l'application cible ; et
la réalisation d'une opération OU exclusif sur le nom codé de table de symboles et la valeur de hachage, pour générer un nom de table de symboles du progiciel compilé d'installation d'application.

9. Procédé selon l'une quelconque des revendications 6 à 8, après la compilation d'un progiciel d'installation d'application de l'application cible selon les informations d'identification de terminal, comprenant en outre :
le chiffrement du progiciel compilé d'installation d'application ; et
l'envoi du progiciel compilé d'installation d'application au terminal comprend :
l'envoi du progiciel compilé et chiffré d'installation d'application au terminal, de telle façon que, après que le terminal installe l'application cible dans l'environnement d'exécution, le terminal déchiffre le progiciel compilé et chiffré d'installation d'application selon une clef privée, prédéfinie dans une solution d'architecture, et exécute l'application cible.

10. Procédé selon la revendication 9, dans lequel le chiffrement du progiciel compilé d'installation d'application comprend :
la détermination d'un constructeur de classe dans le progiciel compilé d'installation d'application ; et
le chiffrement du constructeur de classe.

11. Terminal, comprenant :
une unité d'envoi (701), configurée pour envoyer une demande de téléchargement d'application concernant une application cible à un serveur de gestion d'applications, dans lequel la demande de téléchargement d'application porte des informations d'identification de terminal qui identifient le terminal de façon unique, de telle façon que le serveur de gestion d'applications est permis de compiler un progiciel d'installation d'application de l'application cible selon les informations d'identification de terminal ;
une unité de réception (702), configurée pour recevoir le progiciel compilé d'installation d'application envoyé par le serveur de gestion d'applications ; et
une unité d'installation (703), configurée pour installer, selon le progiciel compilé d'installation d'application, l'application cible dans un environnement d'exécution qui est fondé sur les informations d'identification de terminal, dans lequel l'environnement d'exécution est obtenu en compilant un fichier intermédiaire prédéfini selon les informations d'identification de terminal, et le fichier intermédiaire prédéfini comprend un fichier d'exécution et un fichier cadre dans lequel le fichier intermédiaire prédéfini compilé constitue l'environnement d'exécution qui est fondé sur les informations d'identification de terminal,
dans lequel la compilation du fichier intermédiaire prédéfini selon les informations d'identification de terminal prédéfinies dans une solution d'architecture comprend :
l'obtention d'une valeur de hachage des informations d'identification de terminal ; et
la compilation du fichier intermédiaire prédéfini selon la valeur de hachage, et la génération d'une interface binaire d'application, ABI, correspondant à la valeur de hachage.

12. Serveur de gestion d'applications, comprenant :
une unité de réception (501), configurée pour recevoir une demande de téléchargement d'application qui concerne une application cible et qui est envoyée par un terminal, dans lequel la demande de téléchargement d'application porte des informations d'identification de terminal qui identifient le terminal de façon unique ;
une unité de compilation (502), configurée pour compile un progiciel d'installation d'application de l'application cible selon les informations d'identification de terminal ; et
une unité d'envoi (503), configurée pour envoyer le progiciel compilé d'installation d'application au terminal, de telle façon que le terminal installe l'application cible dans un environnement d'exécution qui est fondé sur les informations d'identification de terminal, dans lequel l'environnement d'exécution est obtenu par le terminal en compilant un fichier intermédiaire prédéfini du terminal selon les informations d'identification de terminal, et le fichier intermédiaire prédéfini comprend un fichier d'exécution et un fichier cadre,
dans lequel la compilation d'un progiciel d'installation d'application de l'application cible selon les informations d'identification de terminal comprend :
l'obtention d'une valeur de hachage des informations d'identification de terminal ; et
la compilation du progiciel d'installation d'application de l'application cible selon la valeur de hachage, et la génération d'une interface binaire d'application, ABI, correspondant à la valeur de hachage.
